# EUROPÄISCHE PATENTSCHRIFT

(11) **EP 0 684 003 B1**
(45) Veröffentlichungstag und Bekanntmachung des Hinweises auf die Patenterteilung: **01.10.1997**
(21) Anmeldenummer: 95810334.3
(22) Anmeldetag: 19.05.1995
(51) Int. Cl.: A47J 42/38, A47J 42/46, A47J 31/42

(54) **Mahlwerk für Kaffeemaschine**
Grinding device for a coffee mill
Rouage d'un moulin à café

(30) Priorität: 25.05.1994 DE 4418139
(43) Veröffentlichungstag der Anmeldung: 29.11.1995
(73) Patentinhaber: Samaro Engineering und Handels AG, CH-8621 Wetzikon (CH)
(72) Erfinder: Aebi, Thomas, CH-8493 Saland (CH); Ochsenbein, André, CH-8332 Russikon (CH)
(74) Vertreter: Rottmann, Maximilian R.

(56) Entgegenhaltungen:
- DE-A- 3 631 771
- DE-C- 3 619 126
- DE-C- 3 632 688

## Beschreibung

Die vorliegende Erfindung betrifft ein Mahlwerk für Kaffeemühlen, insbesondere für die Verwendung in Kaffeemaschinen, mit einem kegelförmigen Mahlwerkzeug, das vertikalachsig innerhalb eines Mahlkragens rotiert und über ein Zahnradgetriebe mit einer Antriebsvorrichtung verbunden ist, wobei das Mahlwerkzeug mit einem Austragteller und dieser mit einem rotierenden Getriebeteil achsial verbunden ist, wobei ferner zwischen dem Getriebeteil und dem Austragteller eine Klauenkupplung und zwischen dem Austragteller und dem Mahlwerkzeug eine das übertragbare Drehmoment begrenzende Sicherheitskupplung vorhanden ist, welche letztere in achsialen Bohrungen des Austragtellers bewegliche, unter Federdruck in Öffnungen an der Stirnseite des Mahlwerkzeugs teilweise eingreifende Kugeln aufweist, und wobei der Austragteller und der Getriebeteil aus Kunststoff bestehen.

Mahlwerke dieser Art bestehen weitgehend aus Kunststoff. Insbesondere sind die Gehäuseteile und alle beweglichen Teile desselben (ausser Achsen und Wellen) aus Kunststoff gefertigt.

Im Betrieb kann das Mahlwerk mitunter überlastet werden, z.B. wenn das Mahlgut hartes mineralisches Material in Form von Sandkörnern oder Steinchen mitführt. Wenn solches Fremdmaterial zwischen Mahlwerkzeug und Mahlkragen gerät, kann das Mahlwerkzeug zum Stillstand kommen. In einem solchen Fall spricht die Sicherheitskupplung an, um die Antriebsvorrichtung zu entlasten. Bevor die Sicherheitskupplung jedoch gänzlich gelöst ist, kann sich der bei einem plötzlichen Stillstand des Mahlwerkzeugs auftretende Stoss durch die von der Antriebsvorrichtung her weiter bewegte Masse schädlich auf alle an der Drehmomentübertragung beteiligten Organe auswirken. Ausserdem kann sich der Stossvorgang, wenn auch in etwas abgeschwächter Form, bis zum Abstellen der Antriebsvorrichtung mehrmals wiederholen, und zwar jedesmal, wenn die Sicherheitskupplung wieder zum Eingriff kommt. In Kaffeemaschinen ist der Mahlbetrieb zwar zeitlich begrenzt, z.B. auf 10 bis 20 sec; trotzdem kann das Mahlwerk zu erheblichem Schaden kommen, insbesondere wenn eine solche Störung am Anfang dieser Zeitspanne auftritt.

Infolge von Überlastungsfällen dieser Art werden vor allem die aus Kunststoff bestehenden Zahnräder des Zahnradgetriebes stark in Mitleidenschaft gezogen, wobei gelegentlich auch Zähne abbrechen können. Ausserdem können die Mündungen der Kugelbohrungen des Austragtellers durch die Kugeln bei überhöhter Krafteinwirkung und der dabei entstehenden Reibungswärme derart verformt werden, dass danach eine korrekte Kraftübertragung durch die Sicherheitskupplung nicht mehr gewährleistet ist. Die Erfahrung zeigt, dass bei häufigem Auftreten von Betriebsstörungen durch die Zufuhr artfremden Materials sehr rasch eine starke Abnutzung der genannten Teile eintritt, so dass das Mahlwerk unter Umständen ziemlich häufig ausgewechselt werden muss.

Der Erfindung liegt die Aufgabe zugrunde, das Mahlwerk der gattungsgemässen Art derart zu verbessern, dass Überlastungen der genannten Art weniger grosse Auswirkungen haben und dadurch die erwähnten Nachteile vermieden werden, um eine höhere Lebensdauer des Mahlwerks zu erzielen.

Bei dem Mahlwerk nach der Erfindung ist diese Aufgabe dadurch gelöst, dass an der dem Mahlwerkzeug zugewandten Stirnseite des Austragtellers eine Metallscheibe eingesetzt ist, in welcher sich die Mündungen der Kugelbohrungen befinden, und dass zwischen den Klauen der Klauenkupplung elastische Dämpfungskörper vorgesehen sind.

Durch diese Massnahmen wird einerseits die Betriebssicherheit der Sicherheitskupplung erhöht und andererseits die Auswirkung einer übermässigen Stossbelastung auf das Getriebe stark abgeschwächt.

Vorzugsweise weist der Getriebeteil an der dem Austragteller zugewandten Seite radiale rippenförmige Klauen auf, auf welche je ein Dämpfungskörper aufgesetzt ist. Diese Lösung ermöglicht eine einfache Montage der Dämpfungskörper.

Bei einer bevorzugten Ausführungsform der Erfindung sind die Dämpfungskörper kreisringsektorförmig ausgebildet, wobei der Abstand jeweils paralleler Endseiten benachbarter Dämpfungskörper einen Spalt bilden, in den eine Klaue des Austragtellers passend eingreift. Zur Erhöhung der Elastizität können die Dämpfungskörper mit achsialen Durchgangslöchern versehen sein.

In der beigefügten Zeichnung ist ein Ausführungsbeispiel der Erfindung dargestellt, und zwar zeigen:
- Fig. 1: einen Längsschnitt einer Kaffeemühle mit einem erfindungsgemässen Mahlwerk;
- Fig. 2: einen Längsschnitt durch einen als Baueinheit ausgebildeten Mahlrotor, mit Mahlwerkzeug, Austragteller und Getriebeteil;
- Fig. 3: eine Seitenansicht des Austragtellers;
- Fig. 4: eine Draufsicht des Austragtellers;
- Fig. 5: eine Unteransicht des Austragtellers;
- Fig. 6: eine Seitenansicht des Getriebeteils;
- Fig. 7: eine Draufsicht des Getriebeteils;
- Fig. 8: einen Längsschnitt des Getriebeteils nach der Linie VIII-VIII in Fig. 7.

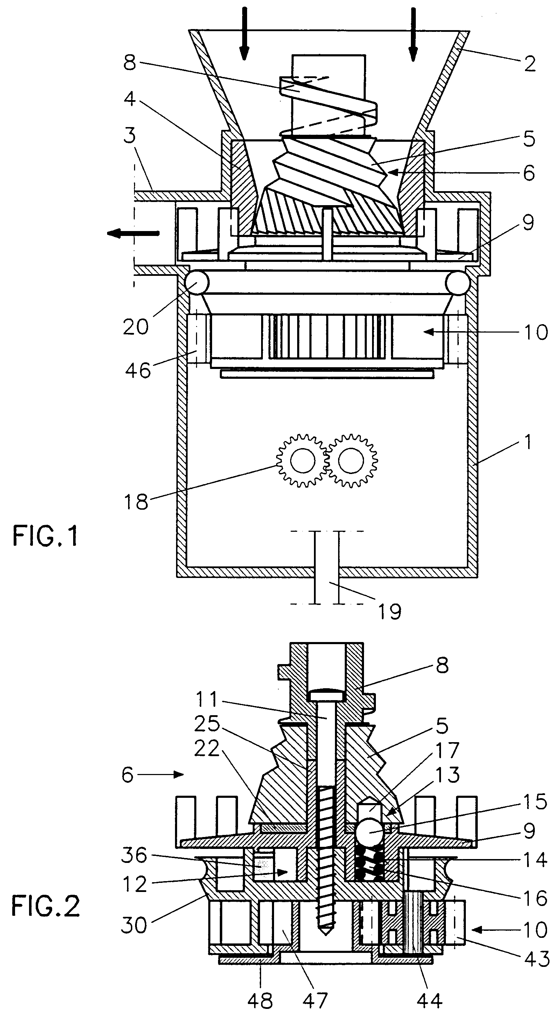

Die Kaffeemühle nach Fig. 1 besitzt ein schematisch dargestelltes Gehäuse 1 aus Kunststoff, das mit einem Einlasstrichter 2 für die Kaffeebohnen und mit einem Auslassstutzen 3 für das Kaffeemehl versehen ist. In das Gehäuse 1 ist ein Mahlkragen 4 aus Metall eingesetzt. Innerhalb des Mahlkragens 4 befindet sich ein mit diesem zusammenarbeitendes kegelförmiges Mahlwerkzeug 5 aus Metall, das Bestandteil eines gesamthaft mit 6 bezeichneten, vertikalachsig drehbar angeordneten Mahlrotors ist, der zusammen mit dem Mahlkragen 4 das Mahlwerk bildet. Zu dem als Baueinheit ausgebildeten Mahlrotor 6 gehören ausserdem eine im Trichter 2 wirksame Einzugschnecke 8, ein Austragteller 9 und ein Getriebeteil 10, welche alle im wesentlichen aus Kunststoff bestehen. Die Teile 5, 8, 9 und 10 sind gemäss Fig. 2 durch eine Zentralschraube 11 achsial miteinander verbunden.. Durch die von der Zentralschraube 11 ausgeübte Verbindungskraft ist zwischen den Teilen 5, 9 und 10 auch ein gewisser Reibungsschluss hinsichtlich der Drehmomentübertragung vorhanden. Zur Hauptsache erfolgt die Drehmomentübertragung vom Getriebeteil 10 zum Mahlwerkzeug 5 hingegen durch eine zwischen Getriebeteil 10 und Austragteller 9 wirksame Klauenkupplung 12 und durch eine zwischen Austragteller 9 und Mahlwerkzeug 5 wirksame, das übertragbare Drehmoment begrenzende Sicherheitskupplung 13.

Letztere weist in achsialen Bohrungen 14 des Austragtellers 9 bewegliche Kugeln 15 auf, welche unter dem Druck je einer Feder 16 in Öffnungen 17 an der Stirnseite des Mahlwerkzeugs 5 teilweise eingreifen.

Weitere Getriebeteile 18 und die mit einem Antriebsmotor zu verbindende Antriebswelle 19 sind nur andeutungsweise dargestellt. Als Drehlager für den Mahlrotor 6 ist ein Kugellager vorgesehen, dessen Kugeln 20 im Gehäuse 1 und am äusseren Rand des Getriebeteils 10 geführt sind.

Gemäss den Fig. 1 bis 5 ist der aus einem Giessharz hergestellte Austragteller 9 an seinem äusseren Rand mit nach oben gerichteten Windflügeln 21 versehen. An der dem Mahlwerkzeug 5 zugewandten Stirnseite des Auftragtellers 9 ist eine Metallscheibe 22 eingegossen, in welcher sich die Mündungen 23 der Kugelbohrungen 14 befinden. Die Metallscheibe 22 ist gegen Verdrehen gesichert durch zylindrische Gusszapfen 24, welche von der Oberseite des Austragtellers 9 abstehen und in passende Bohrungen der Metallscheibe 22 eingreifen. Das kegelförmige Mahlwerkzeug 5 ruht auf dieser Metallscheibe 22 und ist durch einen Hülsenansatz 25 des Austragtellers 9 radial geführt. An der Unterseite des Austragtellers 9 sind, ausgehend von einer zentralen Nabe 26 drei Klauen 27 ausgebildet, welche mit entsprechenden Klauen am Getriebeteil 10 zusammenarbeiten und zugleich als Halter für die Kugeln 15 und Federn 16 ausgebildet und dazu mit den durchgehenden Bohrungen 14 versehen sind.

Der Getriebeteil 10 weist gemäss den Fig. 1, 2 und 6 bis 8 einen aus Giessharz hergestellten Tragkörper 30 für ein Planetengetriebe auf. Oberhalb einer Bodenplatte 31 befindet sich ein zylindrischer Zapfen 32, welcher in die Nabe 26 des Austragtellers 9 passt und eine Bohrung 33 aufweist, in welche das Gewinde der Zentralschraube 11 eingedreht ist. Der Zapfen 32 ist von einem zylindrischen Kragen 34 umgeben, wobei der hohlzylindrische Raum zwischen dem Zapfen 32 und dem Kragen 34 die Klauenkupplung 12 aufnimmt. An der Bodenplatte 31 des Tragkörpers 30 stützen sich ausserdem die Federn 16 der Sicherheitskupplung 13 ab. An der Innenseite des Kragens 34 sind radial nach innen gerichtete, rippenförmige Klauen 35 ausgebildet, welche indirekt mit den Klauen 27 am Austragteller 9 zusammenarbeiten. Als Zwischenglieder sind elastische Dämpfungskörper 36 vorgesehen, welche auf die Klauen 35 aufgesetzt sind und zur Erhöhung der Elastizität noch mit achsialen Durchgangslöchern 37 versehen sind. Die Dämpfungskörper 35 sind kreisringsektorförmig ausgebildet, wobei der Abstand jeweils paralleler Endseiten benachbarter Dämpfungskörper 35 einen Spalt 38 bilden, in den eine Klaue 27 des Austragtellers 9 passend eingreift.

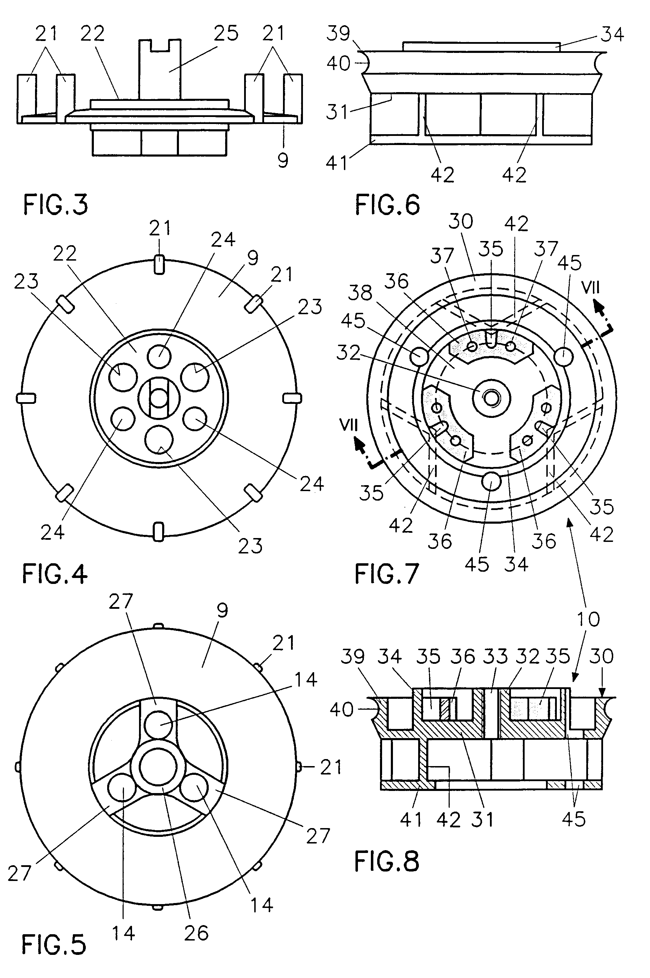

An einem äusseren Kranz 39 des Tragkörpers 30 ist eine umlaufende Führungsnut 40 für die Kugeln 20 der Drehlagerung ausgebildet. An der dem Kranz 39 gegenüberliegenden Seite des Tragkörpers 30 befindet sich ein Ringflansch 41, der mit Abstand parallel zur Bodenplatte 31 angeordnet und durch drei winklige Stege 42 mit dieser verbunden ist. Zwischen der Bodenplatte 31 und dem Ringflansch 41 ist das Planetengetriebe angeordnet. Drei Planetenräder 43 sind zwischen den Stegen 42 angeordnet und drehen um Achsen 44, welche in miteinander fluchtenden Bohrungen 45 (Fig. 7, 8) der Bodenplatte 31 und des Ringflansches 41 sitzen. Die Planetenräder 43 kämmen gemäss Fig. 1 mit einem am Gehäuse 1 befestigten oder an diesem angeformten Zahnkranz 46. Das Sonnenrad 47 (Fig. 2) ist mit einem Flansch 48 versehen, mit dem die nicht dargestellten weiteren Getriebeteile 18 verbunden sind.

## Patentansprüche

1. Mahlwerk für Kaffeemühlen, insbesondere für die Verwendung in Kaffeemaschinen, mit einem kegelförmigen Mahlwerkzeug (5), das vertikalachsig innerhalb eines Mahlkragens (4) rotiert und über ein Zahnradgetriebe mit einer Antriebsvorrichtung verbunden ist, wobei das Mahlwerkzeug (5) mit einem Austragteller (9) und dieser mit einem rotierenden Getriebeteil (10) achsial verbunden ist, wobei ferner zwischen dem Getriebeteil (10) und dem Austragteller (9) eine Klauenkupplung (12) und zwischen dem Austragteller (9) und dem Mahlwerkzeug (5) eine das übertragbare Drehmoment begrenzende Sicherheitskupplung (13) vorhanden ist, welche letztere in achsialen Bohrungen (14) des Austragtellers (9) bewegliche, unter Federdruck in Öffnungen (17) an der Stirnseite des Mahlwerkzeugs (5) teilweise eingreifende Kugeln (15) aufweist, und wobei der Austragteller (9) und der Getriebeteil (10) aus Kunststoff bestehen, dadurch gekennzeichnet, dass an der dem Mahlwerkzeug (5) zugewandten Stirnseite des Austragtellers (9) eine Metallscheibe (22) eingesetzt ist, in welcher sich die Mündungen (23) der Kugelbohrungen (14) befinden, und dass zwischen den Klauen (27, 35) der Klauenkupplung (12) elastische Dämpfungskörper (36) vorgesehen sind.

2. Mahlwerk nach Anspruch 1, dadurch gekennzeichnet, dass die Metallscheibe (22) verdrehungssicher in den Austragteller (9) eingegossen ist.

3. Mahlwerk nach Anspruch 1, dadurch gekennzeichnet, dass der Getriebeteil (10) an der dem Austragteller (9) zugewandten Seite radiale rippenförmige Klauen (35) aufweist, auf welche je ein Dämpfungskörper (36) aufgesetzt ist.

4. Mahlwerk nach Anspruch 3, dadurch gekennzeichnet, dass die Dämpfungskörper (36) kreisringsektorförmig ausgebildet sind, wobei der Abstand jeweils paralleler Endseiten benachbarter Dämpfungskörper (36) einen (38) Spalt bilden, in den eine Klaue (27) des Austragtellers (9) passend eingreift.

5. Mahlwerk nach Anspruch 4, dadurch gekennzeichnet, dass die Dämpfungskörper (36) zur Erhöhung der Elastizität mit achsialen Durchgangslöchern (37) versehen sind.

6. Mahlwerk nach einem der vorhergehenden Ansprüche, dadurch gekennzeichnet, dass das Mahlwerkzeug (5), der Austragteller (9), der Getriebeteil (10) sowie eine Einzugsschnecke (8) zu einem Mahlrotor (6) baulich vereinigt sind.

## Claims

1. Grinder for coffee mills, in particular for use in coffee machines, with a conical grinding tool (5), which rotates about a vertical axis within a grinding collar (4) and is connected by way of toothed wheel gearing to a driving device, the grinding tool (5) being axially connected to a discharge plate (9) and the latter to a rotating gear part (10), furthermore between the gear part (10) and the discharge plate (9) a claw coupling (12) being provided and between the discharge plate (9) and the grinding tool (5) a safety clutch (13) being provided which limits the torque able to be transmitted, which safety clutch (13) comprises balls (15) able to move in axial bores (14) of the discharge plate (9) and partly engaging under spring pressure in openings (17) on the end face of the grinding tool (5), and the discharge plate (9) and the gear part (10) consisting of synthetic material, characterised in that inserted on the end face of the discharge plate (9) facing the grinding tool (5) is a metal disc (22), in which the openings (23) of the ball holes (14) are located and that provided between the claws (27, 35) of the claw coupling (12) are resilient damping members (36).

2. Grinder according to Claim 1, characterised in that the metal disc (22) is integrally cast in the discharge plate (9) so that it is protected against torsion.

3. Grinder according to Claim 1, characterised in that on the side facing the discharge plate (9), the gear part (10) comprises radial, rib-like claws (35), on each of which a damping member (36) is fitted.

4. Grinder according to Claim 3, characterised in that the damping members (36) are constructed in the shape of a sector of a circular ring, the distance between respective parallel end sides of adjacent damping members (36) forming a gap (38) in which a claw (27) of the discharge plate (9) appropriately engages.

5. Grinder according to Claim 4, characterised in that the damping members (36) are provided with axial through-holes (37) for increasing the elasticity.

6. Grinder according to one of the preceding Claims, characterised in that the grinding tool (5), the discharge plate (9), the gear part (10) as well as a draw-in worm (8) to a grinding rotor (6) are structurally combined.

## Revendications

1. Elément broyeur pour moulins à café, en particulier pour l'utilisation dans des machines à café, équipé d'un outil de broyage (5) de forme conique, qui tourne sur un axe vertical à l'intérieur d'une collerette de broyage (4) et est relié par un engrenage à un dispositif d'entraînement, l'outil de broyage (5) étant relié à un plateau d'évacuation (9) et celui-ci étant relié axialement à une partie de transmission (10) en rotation, un accouplement à griffes (12) existant également entre la partie de transmission (10) et le plateau d'évacuation (9) et un accouplement de sécurité limitant le couple transmissible existant entre le plateau d'évacuation (9) et l'outil de broyage (5), lequel accouplement présente dans les alésages (14) axiaux du plateau d'évacuation (9) des billes (15) mobiles s'engageant en partie sous pression de ressort dans des orifices (17) pratiqués sur la face frontale de l'outil de broyage (5) et le plateau d'évacuation (9) ainsi que la partie de transmission (10) étant en plastique, caractérisé en ce que sur la face avant, tournée vers l'outil de broyage (5), du plateau d'entraînement (9) est inséré un disque de métal (22) dans lequel se trouvent les débouchés (23) des alésages sphériques (14), et en ce que des corps d'amortissement (36) élastiques sont prévus entre les griffes (27, 35) de l'accouplement à griffes (12).

2. Elément broyeur selon la revendication 1, caractérisé en ce que le disque de métal (22) est scellé dans le plateau d'évacuation (9) de façon à l'empêcher de tourner.

3. Elément broyeur selon la revendication 1, caractérisé en ce que la partie de transmission (10) présente sur le côté tourné vers le plateau d'évacuation (9) des griffes (35) radiales en forme de nervures sur chacune desquelles est posé un corps d'amortissement (36).

4. Elément broyeur selon la revendication 3, caractérisé en ce que les corps d'amortissement (36) sont conçus avec une forme de secteur circulaire, l'espacement des côtés d'extrémités parallèles respectifs de corps d'amortissement (36) voisins formant une fente (38) dans laquelle s'engage de façon adéquate une griffe (27) du plateau d'évacuation (9).

5. Elément broyeur selon la revendication 4, caractérisé en ce que les corps d'amortissement (36) sont pourvus de trous de passage (37) axiaux afin d'augmenter l'élasticité.

6. Elément broyeur selon l'une quelconque des revendications précédentes, caractérisé en ce que l'outil de broyage (5), le plateau d'évacuation (9), la partie de transmission (10) et une vis sans fin d'amenée (8) sont réunis au niveau de la construction pour faire un rotor de broyage (6).
